# EUROPÄISCHE PATENTANMELDUNG

(11) **EP 3 118 587 A1**
(43) Veröffentlichungstag der Anmeldung: **18.01.2017**
(21) Anmeldenummer: 15176996.5
(22) Anmeldetag: 16.07.2015
(51) Int. Cl.: G01D 11/00, G01D 11/02, G01D 11/24, G01D 11/30

(54) **FEDERARM FÜR EIN MESSGERÄT MIT EINEM RASTBOLZEN**

(71) Anmelder: Wachendorff Automation GmbH & Co. KG, 65366 Geisenheim (DE)
(72) Erfinder: Hanß, Tobias, 55413 Trechtingshausen (DE); Armbrüster, Mathias, 55545 Bad Kreuznach (DE); Prause, Robert, 65375 Oestrich-Winkel (DE)
(74) Vertreter: Tergau & Walkenhorst Patentanwälte - Rechtsanwälte

(57) **Zusammenfassung**

Ein Federarm für ein Messgerät, insbesondere einen Drehgeber mit einem Messrad, mit einer Schwinge, deren eines Ende zur Aufnahme eines Messgerätes ausgeformt ist und derem anderen Ende eine Gelenkeinheit zugeordnet ist, wobei die Schwinge gegenüber der Gelenkeinheit um eine Drehachse in zumindest einem Kreissegment drehbar gelagert ist, soll eine besonders leichte und einfache Wartung des zu messenden Objekt und des Messgerätes ermöglichen, ohne dass der Anpressdruck bzw. die Ausrichtung des Federarms neu eingestellt werden muss. Zum Feststellen der Schwinge gegenüber der Gelenkeinheit, umfasst diese dazu einen Rastbolzen, der im Falle der Feststellung in eine Führung in der Gelenkeinheit eingreift.

## Beschreibung

Die Erfindung bezieht sich auf einen Federarm für ein Messgerät, insbesondere einen Drehgeber mit einem Messrad, mit einer Schwinge, deren eines Ende zur Aufnahme eines Messgerätes ausgeformt ist und derem anderen Ende eine Gelenkeinheit zugeordnet ist, wobei die Schwinge gegenüber der Gelenkeinheit um eine Drehachse in zumindest einem Kreissegment drehbar gelagert ist,.

Federarme für Messgeräte kommen insbesondere dann zum Einsatz, wenn die Messgeräte auf einer sich bewegenden Oberfläche aufliegen müssen. Dabei können die Federarme insbesondere Schwingungen der Oberfläche abfangen und gleichzeitig einen gewünschten Anpressdruck erzeugen bzw. aufrechterhalten.

Derartige Messgeräte umfassen üblicherweise ein Messrad mit einer als zylindrische Mantelfläche ausgebildeten Lauffläche und einen Drehgeber, wobei die Geberwelle des Drehgebers drehwinkelgenau mit dem Messrad gekoppelt ist. Solche Messeinrichtungen werden zur Weg- und Geschwindigkeitsmessung von bewegten Objekten in Bezug auf ein vorzugsweise ortsfestes Bauteil, z. B. zur Messung des Weges und der Geschwindigkeit von Transportbändern eingesetzt. Das Messrad sitzt mit seiner Lauffläche auf dem zu messenden Objekt reibschlüssig auf, wobei die Drehachse des Messrades quer zur Bewegungsrichtung des Objektes, z. B. zur Laufrichtung des Transportbandes ausgerichtet ist. Durch die Bewegung des Objektes wird das Messrad und von diesem der Drehgeber angetrieben. Der Drehgeber und das Messrad sind an dem Bauteil, z. B. an einem Maschinengestell, gelagert. Um eine möglichst schlupffreie Messung zu erreichen, sind der Drehgeber und das Messrad üblicherweise senkrecht zur Oberfläche des Objektes, d. h. im Wesentlichen senkrecht zur Bewegungsrichtung des Objektes und senkrecht zur Achse des Messrades federnd an dem Bauteil gelagert. Durch die federnde Lagerung wird das Messrad gegen die sich bewegende Oberfläche des zu messenden Objektes gedrückt, um einen für eine möglichst schlupffreie Messung erforderlichen Reibschluss zu erzeugen.

Zum Einstellen des Anpressdruckes des Messrads gegen die sich bewegende Oberfläche des zu messenden Objektes, ist der Federarm üblicherweise über ein Gelenk an einem ortsfesten Bauteil angebracht. Über dieses Gelenk kann der Federarm und somit auch das Messrad in Richtung der Oberfläche des zu messenden Objektes gedreht werden und auf diese gedrückt werden. Bei einer Wartung des Messgerätes oder aber auch des zu messenden Objektes ist es üblicherweise notwendig, dass das Messgerät von dem zu messenden Objekt entfernt wird. Entweder geschieht dies über ein manuelles Anheben des Messgerätes oder durch eine Verdrehung des Gelenkes. Im ersten Fall bedeutet dies, dass eine betreffende Person während der Wartungszeit das Messgerät dauerhaft anheben bzw. festhalten muss, während im zweiten Fall der Anpressdruck des Messgerätes neu eingestellt werden muss. Bei der Wartung des Messgerätes ist somit die Beteiligung mehrerer Personen notwendig oder aber es werden weitere Arbeitsschritte bei der anschließenden Neueinstellung benötigt.

Der Erfindung liegt daher die Aufgabe zugrunde, einen Federarm für ein Messgerät, insbesondere einen Drehgeber mit einem Messrad, der oben genannten Art anzugeben, der eine besonders leichte und einfache Wartung des zu messenden Objekt und des Messgerätes ermöglich, ohne dass der Anpressdruck bzw. die Ausrichtung des Federarms neu eingestellt werden muss.

Diese Aufgabe wird erfindungsgemäß gelöst, indem zum Feststellen der Schwinge gegenüber der Gelenkeinheit, diese einen Rastbolzen umfasst, der im Falle der Feststellung in eine Führung in der Gelenkeinheit eingreift.

Vorteilhafte Ausgestaltungen der Erfindung sind Gegenstand der Unteransprüche.

Die Erfindung geht von der Überlegung aus, dass eine leichte und einfache Montage dann erreicht werden kann, wenn das Messrad auf besonders einfache Art und Weise in der angehobenen Position bzw. in der von dem zu messenden Material entfernten Position fixiert und gehalten werden kann. Dabei wurde erkannt, dass zur Vermeidung einer kompletten Demontage des Federarms bzw. späteren Neueinstellung des Anpressdruckes diese angehobene Position auch durch eine Verdrehung der Schwinge gegenüber der Gelenkeinheit erreicht werden kann. Um diese Verdrehung zu fixieren, umfasst die Schwinge einen Rastbolzen, der zur Feststellung in eine entsprechend ausgeformte Führung in der Gelenkeinheit eingreift. Je nach Positionierung der Führung in der Gelenkeinheit kann die Schwinge und somit das Messgerät in einer bestimmten angehobenen Position über den Rastbolzen fixiert und gehalten werden. Um eine Rückführung des Messgerätes in die Betriebsposition zu erleichtern und um Schwingungen durch das zu messende Objekt ausgleichen zu können, ist die Schwinge in besonders bevorzugter Ausführung gegenüber dem Lagergehäuse mittels eines Federelements federnd gelagert. Das Federelement ist dabei derart angeordnet, dass die Auslenkung des Messgerätes zur Wartung das Federelement spannt, sodass die Federkraft bei Lösung des Rastbolzens das Messgerät automatisch in die Ausgangs- bzw. Betriebsposition überführt.

Um einerseits ein Verlieren des Rastbolzen zu vermeiden und andererseits eine besonders leichte Feststellung bzw. Einführung des Rastbolzens in die Führung zu ermöglich, umfasst der Rastbolzen in vorteilhafter Ausgestaltung eine Druckfeder, die den Rastbolzen stets in Richtung der Gelenkeinheit und somit auch im Falle der Feststellung in die Führung drückt. Zum Feststellen oder zum Lösen der Feststellung muss der Rastbolzen daher zunächst gegen die Federkraft der Druckfeder rausgezogen werden.

Um ein unbeabsichtigtes Lösen aus der Feststellung weiter zu verhindern, umfasst der Federarm in besonders bevorzugter alternativer oder zusätzlicher Ausführung eine Sicherheitsvorrichtung. Diese Sicherheitsvorrichtung umfasst in vorteilhafter Ausführung einen Stift, der seitlich von dem Rastbolzen hervorsteht und eine entsprechende Ausformung an der Oberseite der Schwinge, in die der Stift gelagert werden kann. Die Ausformung ist dabei derart ausgeführt, dass bei einer Lagerung des Stiftes in der Ausformung der Rastbolzen die Bewegungsrichtung des Rastbolzens aus der Führung heraus blockiert ist. Zur Lösung des Rastbolzens bzw. zur Lösung der Feststellung muss der Stift zunächst aus der Lagerung entfernt werden, was bevorzugt über eine Drehung des Rastbolzens und daraus folgende Drehung des Stiftes aus der Lagerung heraus geschieht. Nach dieser Drehung des Rastbolzens kann dieser, beispielsweise entgegen der Federkraft einer Druckfeder, aus der Führung herausgezogen werden.

Um eine besonders einfache und leichte Einstellung eines Anpressdruckes über eine Verstellung des Federarms gegenüber dem zu messenden Objekt zu ermöglichen, ist es vorteilhaft, wenn während der Einstellung der resultierende Anpressdruck bekannt ist. Eine genaue Einstellung des Anpressdruckes ist insbesondere dann möglich, wenn der Federarm nur in bestimmten Intervallschritten verdreht wird und jedem einzelnen Intervallschritt eine vorher bekannte Erhöhung des Anpressdruckes zugewiesen werden kann. Um derartige Intervallschritte bei der Verstellung in der Gelenkeinheit zu ermöglichen, weist die Grundplatte und das Lagergehäuse in bevorzugter Ausgestaltung jeweils ein Verzahnungsprofil auf, die im Betrieb des Messgerätes ineinandergreifen. Über die definierten Bergkämme und Täler der Verzahnungsprofile kann so die Ausrichtung des Federarms in vorher festgelegten Intervallen verändert werden, wobei jedem Intervall eine vorher bekannte Erhöhung des Anpressdruckes zugeordnet werden kann.

Zusätzlich sorgt das Ineinandergreifen der Verzahnungsprofile für eine formschlüssige Verbindung der Grundplatte und des Lagergehäuses. Um ein Verdrehen der Grundplatte und des Lagergehäuses aufgrund eines zu hohen Anpressdruckes zu verhindern, sind in bevorzugter Ausführung die Bergkämme und dementsprechend auch die Täler der Verzahnungsprofile von der Drehachse aus gesehen radial auf den Stirnflächen der Grundplatte und des Lagergehäuses angeordnet.

Für eine möglichst einfache Einstellung des Anpressdruckes sind in vorteilhafter Ausführung die Verzahnungsprofile im Randbereich der Stirnflächen angeordnet. Dadurch ist es möglich während der Einstellung des Federarms direkt an der von außen sichtbaren Verzahnung den eingestellten Anpressdruck zu erkennen, welche Bergkämme in welchen Tälern einrasten. Dies ermöglicht eine schnelle und insbesondere wiederholbare Einstellung des gewünschten Anpressdruckes.

Um einerseits ein Verkeilen der Verzahnungsprofile bei der Einstellung des Anpressdruckes zu verhindern und andererseits ein sanftes Einrasten in die eingestellte Position zu ermöglichen, sind in besonders bevorzugter Ausführung die Bergkämme und/oder Täler der Verzahnungsprofile zumindest teilweise abgerundet.

Die Einstellung des Anpressdruckes geschieht durch lösen der formschlüssigen Verbindung der Verzahnungsprofile und anschließender Drehung des Lagergehäuses relativ zur ortsfesten Grundplatte. Bei einer manuellen Einstellung des Anpressdruckes wird das Lagergehäuse dabei umgriffen und so gegenüber der Grundplatte verdreht. Zur Erhöhung des Reibungswiderstandes und somit zur besseren Kraftübertragung, umfasst in vorteilhafter Ausführung das Lagergehäuse an der Manteloberfläche Ausformungen, die parallel zur Drehachse angeordnet sind. Diese Ausformungen können beispielsweise als Längsstreben ausgeführt sein und ermöglichen, dass das Lagergehäuse sicher umgriffen werden kann. Zusätzlich können die Längsstreben als optische Markierungen dienen, um in Kombination mit dem Verzahnungsprofil der Grundplatte oder auch zusätzlichen Markierungen an der Oberfläche der Grundplatte eine gewünschte und vorher bekannte Einstellung schnell zu erreichen.

Um eine Verschiebung der Grundplatte und des Lagergehäuses bei der Einstellung zu verhindern und die Drehbewegung zu führen und zu unterstützen, umfasst in besonders bevorzugter Ausgestaltung die Stirnfläche der Grundplatte eine Führungsausformung und die Stirnfläche des Lagergehäuses eine entsprechende Führungsnut. Diese Führungsausformung ist dabei bevorzugt derart ausgebildet, dass sie auch dann noch in der Führungsnut liegt, wenn Verzahnungsprofile bereits nicht mehr ineinandergreifen.

Die mit der Erfindung erzielten Vorteile bestehen insbesondere darin, dass durch die Verwendung eines Rastbolzen zum Feststellen der Schwinge gegenüber der Gelenkeinheit das Messgerät vom zu messenden Objekt entfernt werden kann, ohne dass es manuell gehalten werden muss und ohne dass anschließend der Anpressdruck bzw. allgemein die Ausrichtung des Federarms neu eingestellt werden muss.

Ein Ausführungsbeispiel der Erfindung wird anhand einer Zeichnung näher erläutert. Darin zeigen:
- Fig. 1: einen Federarm für ein Messgerät
- Fig. 2: einen Federarm für ein Messgerät in demontierter Ausführung
- Fig. 3: einen Querschnitt durch die Gelenkeinheit eines
- Fig. 4: einen Querschnitt durch die Gelenkeinheit eines Federarms mit einem Rastbolzen
- Fig. 5: eine Sicherheitsvorrichtung für den Rastbolzen

Gleiche Teile sind in allen Figuren mit denselben Bezugszeichen versehen.

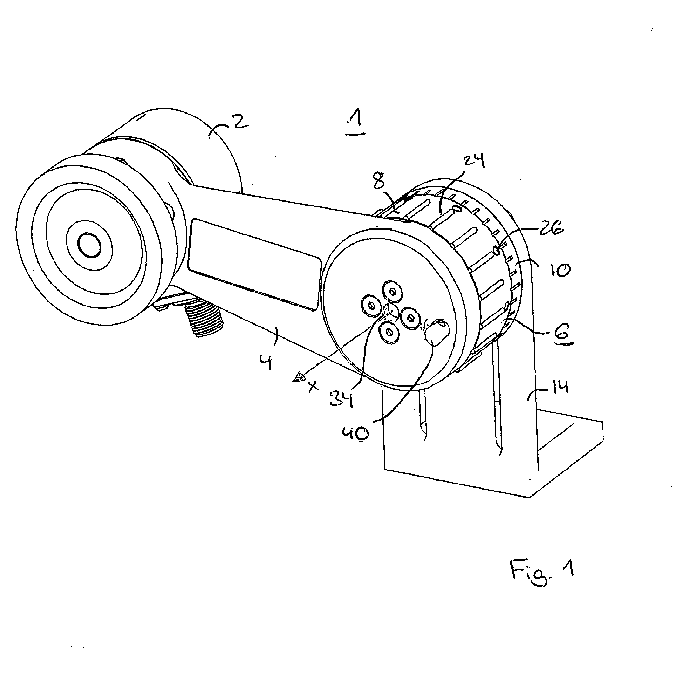

In Fig. 1 ist ein Federarm 1 für ein Messgerät 2 dargestellt. Der Federarm 1 umfasst dabei eine Schwinge 4, an deren einen Ende das Messgerät 2 angeordnet ist. Das Messgerät 2 ist in der Fig. 1 als Drehgeber mit einem Messrad ausgeführt und kann somit die Geschwindigkeit und auch Position eines nicht dargestellten und am Messrad vorbeigeführten und zu messenden Materials bestimmen. Die vorliegende Ausführung eines Federarms 1 mit einem Drehgeber kann daher insbesondere in Holz-, Stahl- und Blechbearbeitungsmaschinen, Sortieranlagen, Druck- und Papiermaschinen und allgemein in Zusammenhang mit Transportbändern zum Einsatz kommen.

Am anderen Ende der Schwinge 4 ist eine Gelenkeinheit 6 zur Befestigung und Ausrichtung der Schwinge 4 angeordnet, die ein Lagergehäuse 8 und eine Grundplatte 10 umfasst. Das Lagergehäuse 8 ist dabei im Wesentlichen zylindrisch ausgeführt und definiert über die Symmetrieachse eine Drehachse x in der Gelenkeinheit 6. Die Gelenkeinheit 6 ist dabei derart an der Schwinge 4 angeordnet, dass die Schwinge 4 gegenüber der Gelenkeinheit 6 und insbesondere gegenüber dem Lagergehäuse 8 um die Drehachse x drehbar gelagert ist. Dies wird durch ein entsprechendes Lagerelement 44 in Form eines Gleitlagers erzielt, das mit dem Lagergehäuse 8 verschraubt und als Gleitlagerung für eine Federarmachse 46 vorgesehen ist. Das Lagerelement 44 ist im Ausführungsbeispiel aus Messing, kann aber auch aus anderen geeigneten Materialien hergestellt sein. Die Federarmachse 46 läuft in der Gleitlagerung des Lagerelements 44 und ist mittels Schrauben mit der Schwinge 4 verbunden. An der Federarmachse 46 ist ein Federelement 12 angeordnet, das im Ausführungsbeispiel nach der Fig. 1 in Form einer Schenkelfeder ausgeführt ist. Diese Schenkelfeder ist dabei derart im Lagergehäuse 8 positioniert und mit der Schwinge 4 verbunden, dass aufgrund der Federkraft eine Ruhelage der Schwinge gegenüber dem Lagergehäuse 8 erzielt wird. Bei einer Auslenkung aus dieser Ruhelage, d.h. eine Drehung der Schwinge 4 gegenüber dem Lagergehäuse 8 um die Drehachse x erzeugt das Federelement 12 eine Rückstellkraft, die versucht die Schwinge 4 in die Ruhelage zu überführen. Liegt im Betrieb des Federarms 1 mit einem Messgerät 2, insbesondere einem Drehgeber mit einem Messrad, das Messgerät 2 bei Auslenkung der Schwinge 4 aus der Ruhelage auf dem zu messenden Material auf, sodass die Schwinge 4 dadurch nicht in die Ruhelage überführt werden kann, erzeugt die Rückstellkraft des Federelements 12 in eine entsprechende Anpresskraft des Messgeräts 2 auf dem zu messenden Material.

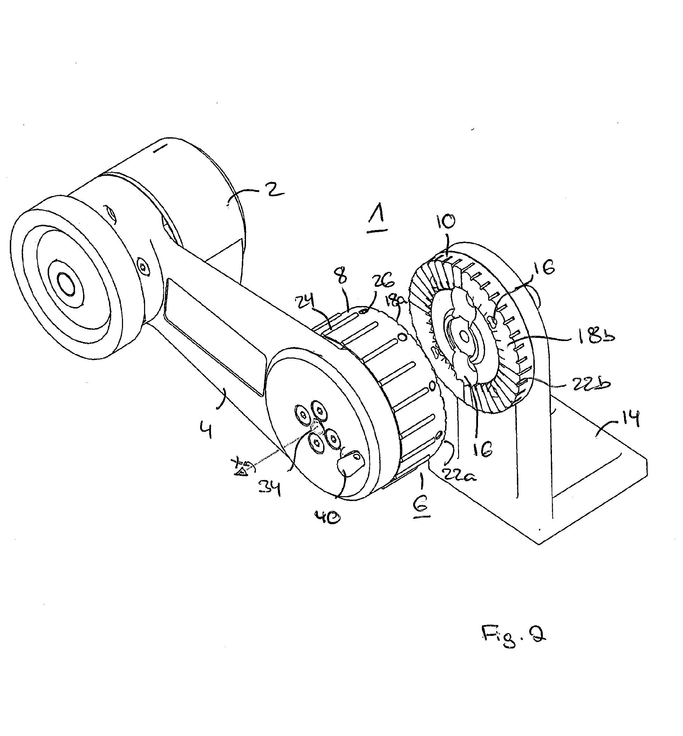

Das Lagergehäuse 8 und die Grundplatte 10 der Gelenkeinheit 6 sind ebenfalls derart angeordnet, dass sie während der Montage oder Einstellung des Messgerätes 2 um die Drehachse x gegeneinander verdreht werden können. Wie der Fig. 2 deutlicher zu entnehmen ist, wird die Grundplatte 10 dabei in einem vorgelagerten Arbeitsschritt ortsfest an einen Montagewinkel 14 montiert. Neben einem Montagewinkel 14 sind auch weitere Befestigungsmittel denkbar, wie auch die Montage der Grundplatte direkt an einer Wand, einem Träger oder einem Rahmen der Maschinenanlage oder des Gebäudes, in dem sich die Messeinrichtung befindet. Dazu umfasst die Grundplatte 10 eine Anzahl von Bohrungen 16, durch die die Grundplatte 10 von beiden Seiten mit Senkkopfschrauben 28 an dem Montagewinkel 14 befestigt werden kann. Die Grundplatte 10 kann in dem vorliegenden Ausführungsbeispiel komplett von der Gelenkeinheit 6 getrennt werden, sodass eine Montage der Grundplatte wesentlich vereinfacht wird.

Die der Schwinge 4 abgewandte Stirnfläche 18a des im Wesentlichen zylinderförmigen Lagergehäuses 8 ist bei der Montage bzw. Einstellung des Messgerätes der Stirnfläche 18b der Grundplatte 10 zugewandt. Das Lagergehäuse 8 und die Grundplatte 10 werden im Rahmen der Montage oder Einstellung des Federarms 1 mittels einer im Lagergehäuse 8 angeordneten Anzugsschraube 20 miteinander verbunden. Sowohl die Stirnfläche 18a des Lagergehäuses 8, als auch die Stirnfläche 18b der Grundplatte 10 umfassen in einem Randbereich ein Verzahnungsprofil 22a,b. Diese Verzahnungsprofile 22a,b sind dabei derart ausgeführt, dass bei einem Anziehen der Anzugsschraube 20, die Verzahnungsprofile 22a,b formschlüssig ineinandergreifen und eine relative Drehbewegung des Lagergehäuses 8 und der Grundplatte 10 um die Drehachse x verhindern. Die Bergkämme der Verzahnungsprofile 22a,b sind im Ausführungsbeispiel von der Drehachse x aus radial angeordnet, sodass beim Anziehen der Anzugsschraube 20 eine Selbstausrichtung ermöglicht wird, indem die Bergkämme des einen Verzahnungsprofils 22a,b, in die zugehörigen Täler des gegenüberliegenden Verzahnungsprofils 22a,b eingreifen. Die Bergkämme und die Täler der Verzahnungsprofile 22a,b sind im Ausführungsbeispiel abgerundet ausgeführt, sodass ein Verkeilen und somit auch eine Beschädigung der Verzahnungsprofile 22a,b vermieden wird.

Im Rahmen der Montage und Einstellung des Federarms 1 bzw. des Messgerätes 2 auf dem zu prüfenden Material wird das Lagergehäuse 8 um die Drehachse x so lange verdreht, bis das Messgerät 2 auf dem zu prüfenden Material aufsetzt. Ein weiteres Drehen des Lagergehäuses 8, spannt das Federelement 12 im inneren des Lagergehäuses vor und erzeugt wie oben bereits dargestellt einen Anpressdruck des Messgerätes 2 auf dem zu prüfenden Material. Um einen gewünschten Anpressdruck möglichst genau und variabel einstellen zu können, ist die Verzahnung möglichst fein. Im Ausführungsbeispiel nach der Fig. 2 sind dabei 36 Bergkämme und Täler vorgesehen, sodass der Federarm 1 in 10°-Schritten eingestellt werden kann. Dies entspricht in der vorliegenden Ausführung einem Anpressdruck von etwa 5 N pro 10°. Nach dem Einstellen des gewünschten Anpressdrucks wird die Anzugsschraube 20 festgezogen und das Lagergehäuse 8 verdrehsicher mit der Grundplatte 10 verbunden.

Zum vereinfachten Einstellen des Lagergehäuses 8 und zur Vorspannung des Federelements 12 umfasst das Lagergehäuse Ausformungen in Form von Längsstreben 24, die an der Manteloberfläche angeordnet sind und parallel zur Drehachse x verlaufen. Diese Längsstreben dienen dazu die Reibung- bzw. die Griffigkeit des Lagergehäuses 8 beim manuellen Einstellen zu erhöhen. Weiterhin können diese Längsstreben 24 in Kombination mit entsprechenden Markierungen auf der Umfangsfläche der Grundplatte 10 als Markierungspunkte verwendet werden, um eine bestimmte Einstellung auch nach dem Lösen der Anzugsschraube schnell wieder zu finden. Sollte die manuelle Kraft zur Einstellung des gewünschten Anpressdruckes nicht ausreichen das Lagergehäuse 8 entsprechend zu verdrehen, kann in dafür vorgesehene Aussparungen 26 ein nicht dargestelltes Hebelelement eingesetzt werden, um die ausgeübte Kraft so weiter zu erhöhen.

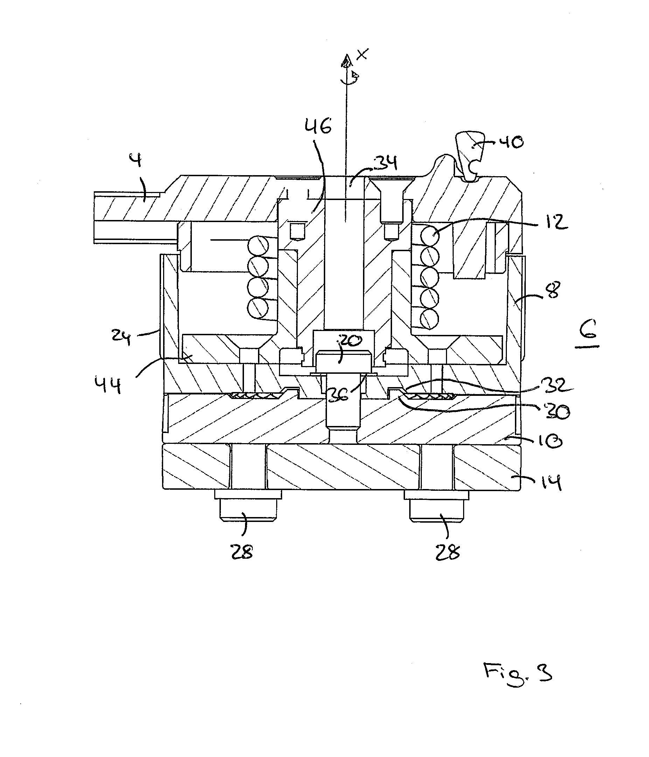

Die Fig. 3 zeigt einen Querschnitt durch eine solche Gelenkeinheit 6 in montierter Ausführung. Die Grundplatte 10 ist mittels Schrauben 28 an einem Montagewinkel 14 verdrehsicher befestigt. Das Lagergehäuse 8 ist über eine Anzugsschraube 20, die in der Drehachse x der Gelenkeinheit 6 liegt, mit der Grundplatte 10 verbunden. Aufgrund der Verzahnungsprofile 22a,b in den Stirnflächen 18a,b der Grundplatte 10 und des Lagergehäuses 8 ist das Lagergehäuse 8 im montierten Zustand ebenfalls verdrehsicher an der Grundplatte 10 und somit auch am Montagewinkel 14 befestigt. Für eine bessere und einfache Montage umfasst die Grundplatte 10 neben dem Verzahnungsprofil 22b auch eine kreisförmige und um die Drehachse x verlaufende Führungsausformung 30, die in einer zugeordneten Führungsnut 32 der Stirnfläche 18a des Lagergehäuses 8 liegt. Dadurch wird bei der Montage oder Einstellung des Federarms 1 eine Verschiebung des Lagergehäuses 8 quer zur Grundplatte 10 verhindert und eine Verdrehung des Lagergehäuses 8 stabilisiert und geführt.

Die Anzugsschraube 20 kann von außen mittels eines entsprechenden Werkzeuges gelöst und angezogen werden. Dabei wird das Werkzeug durch einen Führungsschacht 34 geführt, um die Anzugsschraube 20 zu erreichen. Durch entsprechende Ausformungen im Führungsschacht 34 der Anzugsschraube 20 ist diese im Lagergehäuse 8 derart angeordnet, dass sie auch beim Lösen des Lagergehäuses 8 von der Grundplatte 10 nicht aus dem Lagergehäuse 8 fallen kann. Dies wird durch eine entsprechende Ausbildung des Lagerelements 44 und der Federarmachse 46 erreicht. Im Lagergehäuse 8 ist weiterhin eine Andrückfeder 36 vorgesehen, die dazu dient, die Stirnflächen 18a,b des Lagergehäuses 8 und der Grundplatte 10 auch mit einer leicht gelösten Anzugsschraube 20 aneinanderzudrücken, sodass beim Einstellen des Anpressdruckes über ein Verdrehen des Lagergehäuses das Weiterstellen um eine Verzahnung fühlbar ist, da die Bergkämme der Verzahnung durch die Federkraft in die Täler gedrückt werden. Hierbei ist es von Vorteil, dass die Verzahnungsprofile 22a,b abgerundet ausgeführt sind, da diese eine bessere und leichtere Einstellbarkeit des Federarms 1 bei nur teilweise gelöster Anzugsschraube 20 ermöglichen, wenn bei einem manuellen Verdrehen des Lagergehäuses 8 die Kraft der Andrückfeder 36 überwunden werden muss. Durch die abgerundeten Verzahnungsprofile 22a,b wird zudem ein sanfteres Einrasten in der neuen Position erzielt.

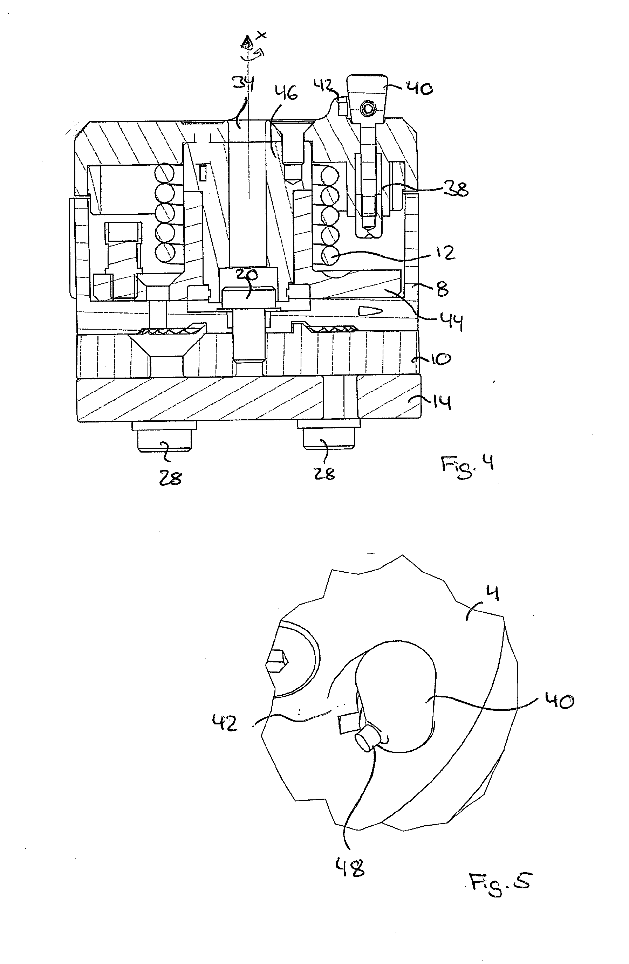

Wie im Ausführungsbeispiel nach Fig. 4 dargestellt umfasst das Lagergehäuse 8 weiterhin eine Führung für einen Rastbolzen 38, in die ein Rastbolzen 40 eingeführt werden kann, um die Schwinge 4 gegenüber einer Verdrehung zum Lagergehäuse 8 zu sichern. Dadurch ist es möglich das Messgerät 2, insbesondere den Drehgeber mit einem Messrad, von dem zu messenden Material abzuheben, ohne dass eine Person das Messgerät dauerhaft anheben bzw. festhalten muss und auch der Anpressdruck auf das Material nicht verstellt wird. Der Rastbolzen 40 sitzt dabei in der Schwinge 4 und wird mit Hilfe einer Druckfeder in Richtung des Lagergehäuses 8 gedrückt. Zum Feststellen der Schwinge muss der Rastbolzen gegen die Federkraft der Druckfeder rausgezogen werden und über der Führung für den Rastbolzen 38 losgelassen werden. Die Druckfeder sorgt dafür, dass der Rastbolzen 40 sicher in der Führung gehalten wird.

Damit der Rastbolzen 40 die Schwinge 4 nicht versehentlich löst ist in Fig. 4 eine Sicherheitsvorrichtung 42 in Form eines seitlichen Stiftes 48 vorgesehen. Dieser Stift 48 am Rastbolzen 40 wird beim Feststellen der Schwinge 4 in eine seitliche Ausformung eingedreht, so dass der Rastbolzen 40 nicht mehr herausgezogen werden kann. Zum entsichern bzw. lösen der Schwinge 4 muss zunächst der Rastbolzen 40 gedreht werden, damit der Stift 48 aus der Ausformung gedreht wird und dann gegen die Federkraft aus der Führung 38 herausgezogen werden.

### Bezugszeichenliste

- 1: Federarm
- 2: Messgerät
- 4: Schwinge
- 6: Gelenkeinheit
- 8: Lagergehäuse
- 10: Grundplatte
- 12: Federelement
- 14: Montagewinkel
- 16: Bohrungen
- 18a,b: Stirnfläche des Lagergehäuses
- 20: Anzugsschraube
- 22a,b: Verzahnungsprofil
- 24: Längsstreben
- 26: Aussparungen
- 28: Schraube
- 30: Führungsausformung
- 32: Führungsnut
- 34: Führungsschacht
- 36: Andrückfeder
- 38: Führung für einen Rastbolzen
- 40: Rastbolzen
- 42: Sicherheitsvorrichtung
- 44: Lagerelement
- 46: Federarmachse
- 48: Stift

- x: Drehachse

## Patentansprüche

1. Federarm (1) für ein Messgerät (2), insbesondere einen Drehgeber mit einem Messrad, mit einer Schwinge (4), deren eines Ende zur Aufnahme eines Messgerätes (2) ausgeformt ist und derem anderen Ende eine Gelenkeinheit (6) zugeordnet ist, wobei die Schwinge (4) gegenüber der Gelenkeinheit (6) um eine Drehachse (x) in zumindest einem Kreissegment drehbar gelagert ist, **dadurch gekennzeichnet, dass** zum Feststellen der Schwinge (4) gegenüber der Gelenkeinheit (6), diese einen Rastbolzen (40) umfasst, der im Falle der Feststellung in eine Führung (38) in der Gelenkeinheit (6) eingreift.

2. Federarm (1) für ein Messgerät (2) nach Anspruch 1, **dadurch gekennzeichnet, dass** die Schwinge (4) gegenüber der Gelenkeinheit (6) mittels eines Federelements (12) federnd gelagert ist.

3. Federarm (1) für ein Messgerät (2) nach einem der Ansprüche 1 oder 2, **dadurch gekennzeichnet, dass** zum Halten des Rastbolzens (40) in der Führung eine Druckfeder vorgesehen ist.

4. Federarm (1) für ein Messgerät (2) nach einem der Ansprüche 1 bis 3, **dadurch gekennzeichnet, dass** eine Sicherheitsvorrichtung (42) gegen ein unbeabsichtigtes Lösen des Rastbolzens (40) aus der Führung (38) vorgesehen ist.

5. Federarm (1) für ein Messgerät (2) nach Anspruch 4, **dadurch gekennzeichnet, dass** die Sicherheitsvorrichtung (42) einen Stift (48), der vom Rastbolzen (40) vorsteht, und eine Ausformung, zur Lagerung des Stiftes (48), an der Schwinge (4) umfasst.

6. Federarm (1) für ein Messgerät (2) nach einem der Ansprüche 1 bis 5, **dadurch gekennzeichnet, dass** die Gelenkeinheit (6) eine ortsfeste Grundplatte (10) und ein im Montage- bzw. Einstellmodus gegenüber der Grundplatte (10) um die Drehachse (x) senkrecht zur Grundplatte (10) drehbar gelagertes und an der Schwinge (4) angeordnetes Lagergehäuse (8) umfasst, **dadurch gekennzeichnet, dass** die Grundplatte (10) und das Lagergehäuse (8) an den jeweils zueinander ausgerichteten Stirnflächen (18a,b) der Grundplatte (10) bzw. des Lagergehäuses (8) in zumindest einem Abschnitt ein Verzahnungsprofil (22a,b) aufweisen.

7. Federarm (1) für ein Messgerät (2) nach Anspruch 1, **dadurch gekennzeichnet, dass** die Bergkämme der Verzahnungsprofile (22a,b) von der Drehachse (x) aus radial angeordnet sind.

8. Federarm (1) für ein Messgerät (2) nach einem der Ansprüche 1 bis 4, **dadurch gekennzeichnet, dass** das Lagergehäuse (8) an der Manteloberfläche Ausformungen (24) aufweist, die parallel zur Drehachse (x) angeordnet sind.

9. Federarm (1) für ein Messgerät (2) nach einem der Ansprüche 1 bis 5, **dadurch gekennzeichnet, dass** die Grundplatte (10) an der Stirnfläche (18b) eine Führungsausformung (30) umfasst und die Stirnfläche (18a) des Lagergehäuses (8) eine zur Führungsausformung (30) korrespondierende Führungsnut (32) aufweist.
